# EUROPEAN PATENT SPECIFICATION

(11) **EP 2 181 795 B1**
(45) Date of publication and mention of the grant of the patent: **12.12.2012**
(21) Application number: 09013634.2
(22) Date of filing: 29.10.2009
(51) Int. Cl.: B23K 3/02, B23K 3/03, B23K 3/047

(54) **Heat transferring member for solder handling device with an inner copper tube coated with alumina ; Electric soldering and desoldering tool with such heat transferring member**
Wärmeübertragungselement für Lötmittelhandhabungsvorrichtungen mit einem eine Alimina aufweisenden Kupferrohr ; Elektrisches Löt- und Entlötwerkzeug mit diesem Wärmeübertragungselement
Élément de transfert de chaleur pour dispositif de brasage avec un tube en cuivre revêtu d'alumine ; Outil de brasage et de débrasage électrique doté d'un tel élément de transfert de chaleur

(30) Priority: 31.10.2008 JP 2008280759
(43) Date of publication of application: 05.05.2010
(73) Proprietor: Hakko Corporation, Osaka-shi, Osaka (JP)
(72) Inventor: Teraoka, Yoshitomo, Osaka-shi Osaka (JP); Nagase, Takashi, Osaka-shi Osaka (JP)
(74) Representative: Müller-Boré & Partner Patentanwälte

(56) References cited:
- US-A- 2 790 060
- US-A- 3 121 781
- US-A1- 2004 065 653
- US-A1- 2004 222 206

## Description

The present invention relates to a heat transferring member for a solder handling device according to the preamble of claim 1 (see, for example, US 2004/222206 A1), for use in soldering by an iron soldering method, and an electric soldering iron, and an electric desoldering tool with the heat transferring member (see claims 8 and 9 respectively).
[Patent Document 1] U.S. Patent No. 6,818,862
[Patent Document 2] WO 02/10477 Al

Heretofore, in electric and electronic industries, a soldering method has been generally employed as a means for connecting and joining between electronic components.

There are soldering methods such as: a flow soldering method using a solder bath for immersing a printed-wiring board with electronic components into molten solder, or immersing a solder joining area directly into a jet flow of molten solder; a reflow soldering method of pre-applying solder paste in a given pattern onto a printed-wiring board by screen printing, placing surface-mount components on the printed-wiring board, and then passing the printed-wiring board through a high-temperature reflow furnace to melt the solder pattern to form a solder joint; or an iron soldering method including both a manual soldiering operation using a tool such as an electric soldering iron, and a machine soldering method using a dedicated automatic machine with a soldering iron unit.

Recent years, a large part of soldering works to electronic components upon wiring boards has been mostly dominated by operations based on the flow soldering method or the reflow soldering method free of the need for human power or suitable for mass production. However, a part of soldering, such as soldering for a particular member and repair operations, needs to rely on a manual tool, such as an electric soldering iron, to be handled by a skilled operator or a dedicated automatic machine. In such a case, a soldering operation using the iron soldering method is essential.

As a conventional heat transferring member employed in soldering for the iron soldering method, there has been known one type which comprises a heat transfer body for melting solder, and an insert pipe made of stainless steel and inserted into a dead-ended hole formed in the heat transfer body, so that the heat from a heating member is conducted from the heat transfer body to solder via the insert pipe.

However, stainless steel has thermal conductivity less than copper. Therefore, considering heat transfer from the heating member to a surface of the heat transfer body, the insert pipe interposed therebetween causes deterioration in efficiency of the heat transfer from the heating member to the heat transfer body.

In this connection, the Patent Publications 1 and 2 disclose a technique of subjecting an inner surface of the hole of the heat transfer body directly to a surface modification treatment to prevent oxidation of the inner surface of the hole of the heat transfer body, instead of interposing the insert pipe between the heating member and the heat transfer body. However, the hole in the heat transfer body to receive therein the heating member is formed to define a dead-ended hole (non-through-hole) having a relatively large depth from a proximal end of the heat transfer body. Therefore, a flow of gas required for the surface modification treatment stagnates inside the hole to preclude a possibility to obtain a homogeneous surface-modified layer.

Patent Document 3 (US 2004/0222206 A1) discloses a soldering iron tip having a copper or copper alloy core and a metal particle sintered member connected to the core to transfer heat therefrom to form a working soldering tip.

Patent Document 4 (US 2,790,060) discloses a electrically heated soldering iron and more particularly to a soldering iron adapted to receive electrical energy directly from the terminals of a storage battery, and to remain in heated condition for a substantially long period of time, even though removed from the electrical energy source.

In view of the above conventional problems, it is an object of the present invention to suppress oxidation of a heat transfer body of a heat transferring member for a solder handling device, while maintaining high heat transfer efficiency.

In order to achieve this object, according to a first aspect of the present invention, there is provided a heat transferring member for a solder handling device, which comprises a heat transfer body of which a basic portion is made of copper or copper alloy, and a pipe including a tubular-shaped substrate made of copper or copper alloy and an aluminum oxide film formed on inner and outer peripheral surfaces of the tubular-shaped substrate. The heat transferring member further comprises that the pipe is press-fitted into a hole formed in the heat transfer body to be received therein a heating member so that the aluminum oxide films are interposed between the heat transfer body and the heating member.

In the heat transferring member of the present invention, the copper or copper alloy pipe having the aluminum oxide film formed on inner and outer peripheral surfaces thereof is press-fitted into the hole of the heat transfer body. Therefore, the extremely stable aluminum oxide films on the inner and outer peripheral surfaces of the pipe are interposed between the heating member and the heat transfer body. Consequently, the aluminum oxide film can prevent oxidization of an inner surface of the hole of the heat transfer body, even if the heat transfer body is used in a high-temperature state due to the heat received from the heating member. In addition, the pipe is made of copper or copper alloy having a high thermal conductivity, so that the heat from the heating member is efficiently conducted via the pipe in cooperation with the aluminum oxide film having the relatively high heat transfer efficiency. This makes it possible to achieve the suppression of oxidation in the heat transfer body while maintaining heat transfer efficiency. As used herein, the term "heat transfer body" is a generic term which means a iron tip of a soldering iron, a sleeve body of an electric solder- sucking device (electric desoldering tool), or the like. Furthermore, the iron tip of the soldering iron is not limited to a type where a pointed head portion and a sleeve body are integrated together as a single piece, but may be a type where each of the pointed head portion and the sleeve body is formed as an independent or separate member.

Preferably, the aluminum oxide film includes an aluminum oxide passivation film formed through a reaction of oxygen in atmospheric air to a copper-aluminum (Cu-Al) alloy layer which is formed on a surface of a copper or copper alloy layer of the tubular-shaped substrate by subjecting the surface of the tubular- shaped substrate to an aluminizing treatment.

In this mode, the copper or copper alloy substrate to be modified by the aluminizing treatment is in the tubular-shape. Therefore, a gas flow would never stagnate inside the tubular-shaped substrate during the aluminizing treatment, so that the alloy layer can be more homogenously formed. This results in the aluminum oxide passivation film to be more homogenously formed, as compared with a technique of subjecting the inner surface of the dead-ended hole of the heat transfer body to an aluminizing treatment. In addition, the aluminum oxide film includes the naturally-formed aluminum oxide passivation film, so that an aluminum oxide passivation film would be immediately re-formed, even if the Cu-Al alloy layer would be exposed to atmospheric air due to the occurrence of damage in the aluminum oxide film on the surface of the tubular-shaped substrate. This makes it possible to maintain oxidation resistance over a long duration.

Preferably, the aluminizing treatment for the surface of the tubular-shaped substrate is an aluminum diffusion modification based on a pack cementation process.

Based on a vapor-phase diffusion effect in this mode, the inner surface of the tubular-shaped substrate having a through-hole can be adequately subjected to the diffusion modification.

Alternatively, the aluminizing treatment for the surface of the tubular-shaped substrate may include processes of applying a mixture of an aluminum powder and a flux onto the surface of the tubular-shaped substrate, and then subjecting the resulting tubular-shaped substrate to a heating treatment to modify the surface of the tubular-shaped substrate.

In this mode, the aluminizing treatment can be performed using a relatively small-scale facility, as compared with a pack cementation process.

Preferably, the tubular-shaped substrate has an annular-shaped inwardly-extending flange formed at a distal end thereof and faces a dead-end of the hole.

Despite of the tubular shape, the pipe in this mode can partially cover an end surface of the hole of the heat transfer body to suppress oxidation of the end surface of the hole of the heat transfer body, while covering the inner surface of the hole of the heat transfer body.

Preferably, the tubular-shaped substrate has a proximal end formed in a polygonal shape in transverse cross-section, and wherein a diameter of a circumscribed circle about the proximal end is greater than an outer diameter of an intermediate portion of the tubular-shaped substrate.

In this mode, the proximal end of the tubular-shaped substrate is formed in a generally polygonal shape in such a manner that the diameter of the circumscribed circle is greater than the outer diameter of the intermediate portion. Therefore, when the pipe is press-fitted into the hole formed in the heat transfer body, from the side of a leading end thereof, a plurality of corners in the proximal end of the pipe bite into the inner surface of the hole of the heat transfer body in a wedgewise manner to allow the pipe to be fixedly engaged with the heat transfer body by a strong press-contact force. This makes it possible to achieve a reliable contact state between the heat transfer body and the pipe, while reducing frictional resistance in portions other than the corners having a maximum outer diameter, during the press-fitting.

Alternatively, the tubular-shaped substrate may have a proximal end of which trailing side is expanding in a flared shape.

In this mode, when the pipe is press-fitted into the hole, while positioning the proximal end of the tubular-shaped substitute on an upstream side of an insertion (press-fitting) direction, an outer surface of a portion of the flared end of the pipe on the side of the leading end thereof can be reliably brought into tight contact with the inner surface of the hole of the heat transfer body to improve the heat transfer efficiency.

The pipe, according to the present invention, is press-fitted in the hole.

This makes it possible to ensure air-tightness between the heat transfer body and the pipe to more reliably enhance the oxidation resistance, while maintaining high heat transfer efficiency.

According to another aspect of the present invention, there is provided an electric soldering iron which comprises the above heat transferring member, and a heating member inserted into the pipe of the heat transferring member, wherein a heat transfer body of the heat transferring member includes a iron tip adapted to melt solder by heat from the heating member to form a solder joint.

In the electric soldering iron of this embodiment, heat can be conducted from the heated heat transfer body to the iron tip to melt solder to form a solder joint. The iron tip may be integrated with the heat transfer body in a single piece, or may be formed as an independent or separate member.

According to another aspect of the present invention, there is provided an electric desoldering tool which comprises the above heat transferring member, a heating member inserted into the pipe of the heat transferring member, and a sucking member provided to the heat transfer body of the heat transferring member and adapted to suck solder melted by heat conducted to the heat transfer body.

As above, the present invention can suppress oxidation of the heat transfer body of the heat transferring member while maintaining high heat transfer efficiency.

These and other objects, features and advantages of the invention will become more apparent upon reading the following detailed description along with the accompanying drawings:
FIG. 1 is a side view of a heat transferring member for an electric soldering iron according to a first embodiment of the present invention;
FIG. 2 is a sectional view of a heat transfer body having a pipe press-fitted in a hole thereof, in the heat transferring member for an electric soldering iron according to the first embodiment;
FIG. 3 is a sectional view for explaining the pipe in the first embodiment;
FIG. 4 is an enlarged view of an area IV in FIG. 3;
FIGS. 5A and 5B are diagrams for explaining a configuration of a proximal end of the pipe in the first embodiment, wherein FIG. 5A is a side view of the proximal end of the pipe, and FIG. 5B is a front view of the proximal end of the pipe;
FIG. 6 is a graph showing a test result, wherein an amount of oxide on a heat transfer body in which the pipe having the tubular-shaped substrate with the copper surface modified in the first embodiment (Example 1) is press-fitted into a hole of the heat transfer body is compared with an amount of oxide on a heat transfer body devoid of measures against oxidization of a surface of a hole thereof;
FIG. 7 is a diagram for explaining a state when the pipe in the first embodiment is press-fitted into the hole of the heat transfer body;
FIG. 8 is a photograph representing an enlarged cross-section of an intermediate region of the tubular-shaped copper substrate in the first embodiment, which shows a thickness of a copper-aluminum alloy layer obtained by diffusing aluminum in the surface of the tubular-shaped copper substrate using a pack cementation process;
FIG. 9 is a photograph representing an enlarged cross-section of a proximal end region of the tubular-shaped copper substrate in the first embodiment, which shows a thickness of a copper-aluminum alloy layer obtained by diffusing aluminum in the surface of the tubular-shaped copper substrate using a pack cementation process;
FIGS. 10A and 10B are diagrams for explaining a configuration of a proximal end of a pipe of a heat transferring member for an electric soldering iron according to a third embodiment of the present invention, wherein the proximal end is fabricated in a generally square shape in transverse cross-section, and wherein FIG. 10A is a side view of the proximal end of the pipe, and FIG. 10B is a front view of the proximal end of the pipe;
FIGS. 11A and 11B are diagrams for explaining a configuration of a proximal end of a pipe of a heat transferring member for an electric soldering iron according to a fourth embodiment of the present invention, wherein the proximal end is fabricated in a flared shape to have a diameter which increases toward a proximal end of the pipe, and wherein FIG. 11A is a side view of the proximal end of the pipe, and FIG. 11B is a front view of the proximal end of the pipe;
FIG. 12 is a diagram for explaining an electric soldering iron according to a fifth embodiment of the present invention;
FIG. 13 is a diagram for explaining a structure of a solder-sucking device according to a sixth embodiment of the present invention;
FIG. 14 is a diagram for explaining a test apparatus for a heat-transfer-efficiency comparison test with respect to the inventive example;
FIG. 15 is a graph showing a result of a heat-transfer-efficiency comparison test for the comparative example, wherein a stainless-steel pipe was used in an electric soldering iron;
FIG. 16 is a graph showing a result of a heat-transfer-efficiency comparison test for the inventive example, wherein a copper pipe subjected to a surface modification treatment was used in an electric soldering iron;
FIG. 17 is a graph for comparing a change in temperature of a iron tip of the inventive example with a change in temperature of a iron tip of the comparative example, in the respective results of the heat-transfer-efficiency comparison tests for the inventive and comparative examples;
FIG. 18 is a graph for comparing the inventive example with the comparative example, in the region R2 and the region R4 in FIG. 17; and
FIG. 19 is an exploded perspective view schematically showing a structure of the electric soldering iron according to each of the embodiments of the present invention.

### EXPLANATION OF REFERENCE SIGNS

- A:: heat transferring member (heat transfer body 3 + pipe 4) for solder handling
- D0:: diameter of hole
- D1:: outer diameter of intermediate portion
- D2:: diameter of circumscribed circle
- N:: sucking member
- 3:: heat transfer body
- 3a:: hole
- 3b:: dead-end
- 31:: pointed head portion (iron tip)
- 32:: heat transfer sleeve portion
- 4:: pipe
- 4a:: copper layer (tubular-shaped substrate)
- 4b:: copper-aluminum alloy layer
- 4c:: aluminum oxide passivation film (aluminum oxide film)
- 4D:: circumscribed circle
- 41:: inwardly-extending flange
- 5:: heater (heating member)

With reference to the drawings, the present invention will be specifically described based on an embodiment and an example thereof.

### [ELECTRIC SOLDERING IRON]

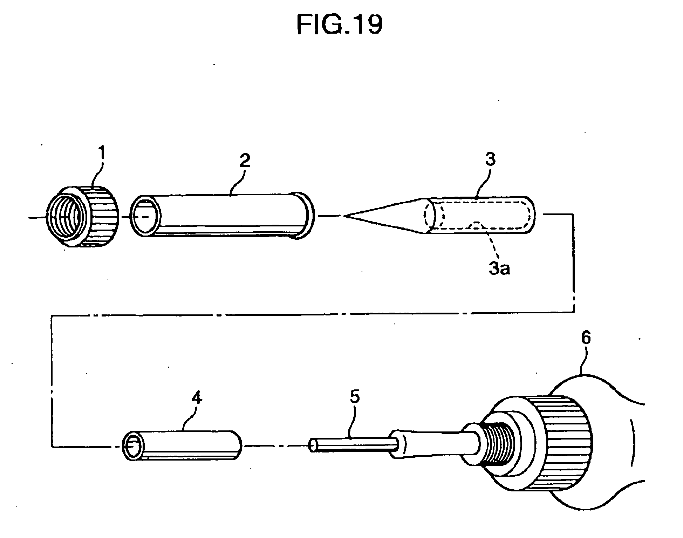

As shown in FIG. 19, an electric soldering iron according to each of the following embodiments of the present invention generally comprises a grip portion 6, a bar-shaped heater 5 provided at an end of the grip portion 6 to serve as a heating member, a heat transfer body 3 of which basic portion is made of copper, a pipe 4 press-fitted in a hole 3a formed in the heat transfer body 3, a protective pipe 2 for fixing the heat transfer body 3 therethrough, and a cap nut 1 for connecting the heat transfer body 3 with the protective pipe 2 to the grip portion 6. A heat transferring member of this embodiment for a solder handling device is an assembly of the heat transfer body 3 and the pipe 4 press-fitted in the heat transfer body 3. In this heat transferring member, the pipe 4 is interposed between the heater 5 and an inner surface of the hole 3a of the heat transfer body 3, to play a role in receiving heat generated by the heater 5 to prevent the inner surface of the hole 3a in the heat transfer body 3 from being oxidized. If high-temperature thermal energy is conducted from the heater 5 directly to a copper surface of the heat transfer body 3, oxidation of the copper surface would be significantly accelerated. Therefore, the copper surface is subjected to a modification treatment, as described in detail later in each embodiment. The temperature control of the heater 5 is conducted in such an ON-OFF manner that a supply of electric power to the soldering iron is turned OFF when an internal temperature the soldering iron measured by a temperature sensor increases to become greater than a predetermined value, whereas turned ON when the internal temperature of the soldering iron measured by the temperature sensor decreases to become equal to or less than the predetermined value.

In the above fundamental structure, the heat transferring member of the present invention may be implemented in various manners, as described below.

### (First Embodiment)

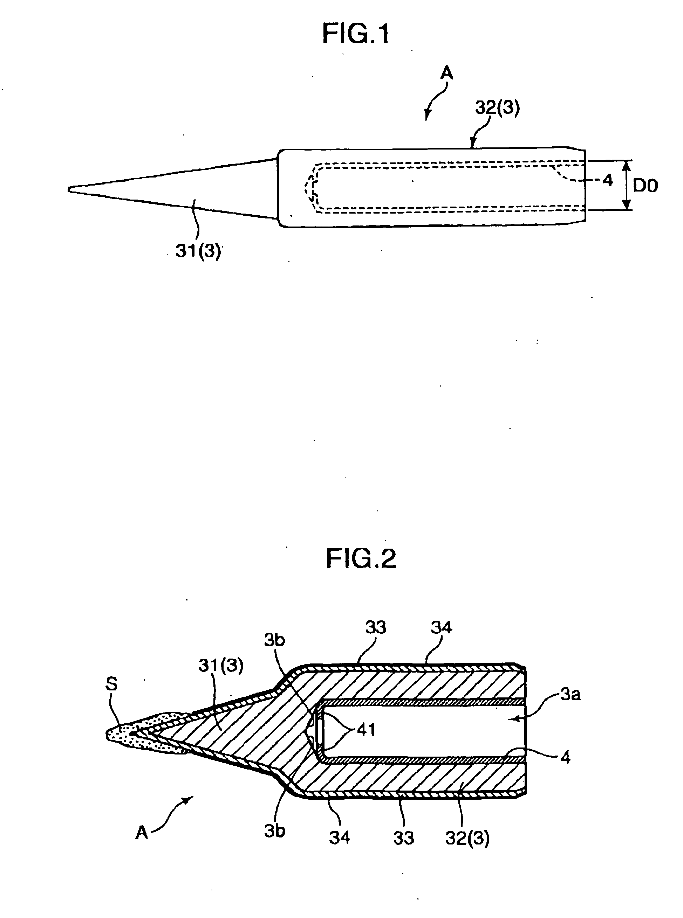

Referring to FIGS. 1 and 2, a copper made heat transfer body 3 of a heat transferring member A according to a first embodiment for an electric solder handling device comprises a taper-shaped pointed head portion 31, and a heat transfer sleeve portion 32 integrated with the pointed head portion 31 and adapted to hold the heater 5. The pointed head portion 31 serves as an iron tip for performing a soldering operation. The heat transfer sleeve portion 32 is a formed with a dead-ended hole 3a for receiving therein the heater 5 and holding the heater 5. The hole 3a defines a columnar-shaped space and has a diameter D0 and an opening opened on an opposite side of the pointed head portion.

In order to prevent the occurrence of a phenomenon that the copper basic portion of the heat transfer body is diffused into molten solder or so-called "erosion by solder", an iron-plated layer 33 is formed on an outer surface of the basic portion to have a thickness of about 300µm. Furthermore, in order to prevent erosion and corrosion of the surface of the iron-plated layer 33 and oxidation of the surface under high-temperature environments, a chromium-plated layer 34 is formed on the surface of the iron-plated layer 33 to have a thickness of about 20µm. The chromium-plated layer 34 is not formed on a tip end of the pointed head portion 31. The tip end where the chromium plated layer 34 is not formed to expose the iron-plated layer 33 will be coated with tin or solder alloy S. An inner surface of the hole 3a of the heat transfer body 3 is not particularly subjected to a surface treatment.

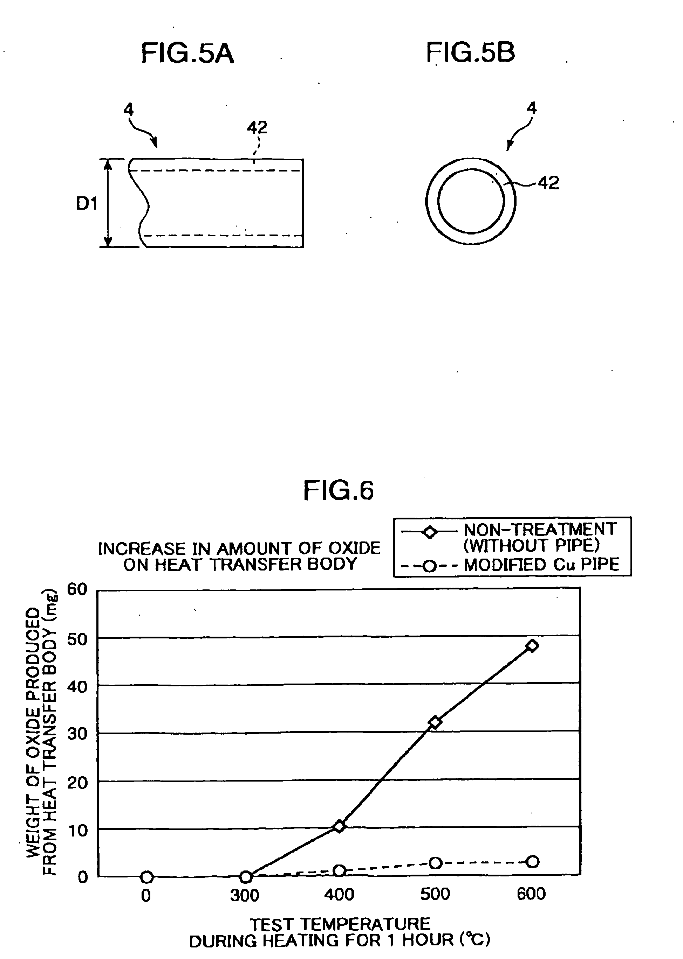

With reference to FIGS. 2 to 5A and 5B, a pipe 4 has a tubular-shaped substrate made of copper, and an after-mentioned aluminum oxide passivation film is formed on a surface of the substrate. A surface modification treatment for the substrate will be described in detail later. In this first embodiment, oxygen-free copper is used as a copper material for the tubular-shaped substrate of the pipe 4 to maximally avoid release of oxygen from the copper material during heating in an inert atmosphere. Pure copper, such as tough pitch copper, or phosphorus deoxidized copper, may also be used in place of the oxygen-free copper. An outer diameter of the pipe 4 at a intermediate position thereof is set to be equal to or slightly greater than an inner diameter D0 (see FIG. 1) of the hole 3a (by about 0mm to 0.05mm). When the pipe 4 is, according to the present invention, press-fitted into the hole 3a, an outer surface of the pipe 4 is clamped by the inner surface of the hole 3a of the heat transfer body 3.

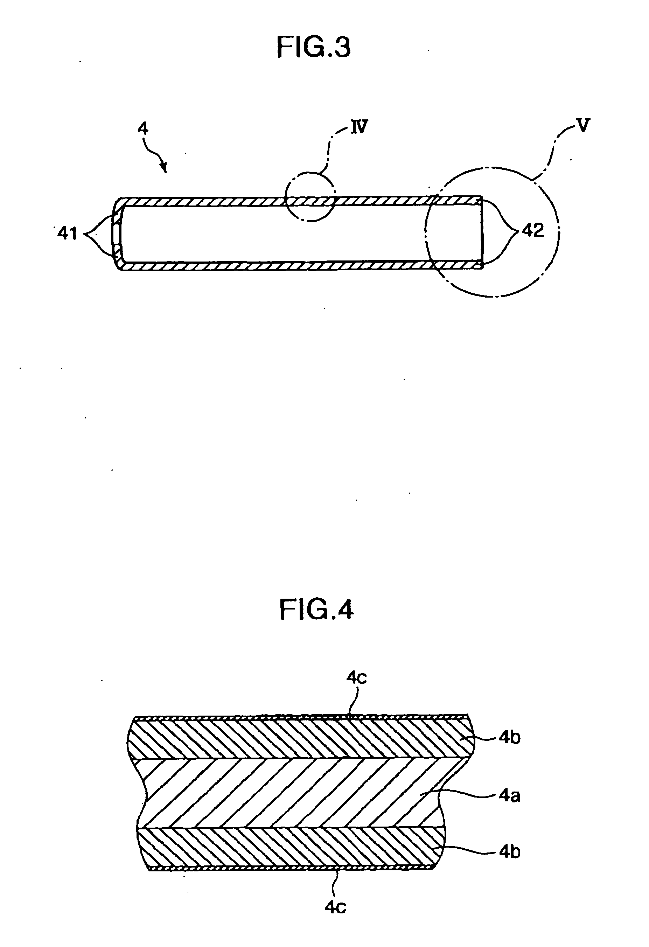

Referring to FIG. 4, in the first embodiment, a copper-aluminum alloy layer 4b having a thickness of about 15µm to 30µm is formed on both inner and outer peripheral surfaces of a copper layer 4a as the substrate of the pipe 4 by subjecting the surface of the copper layer 4a to a calorizing treatment (aluminizing treatment), and further a thin and strong aluminum oxide passivation film 4c having a thickness of 0.01µm to 0.2µm is formed, according to the present invention, as each of two outermost inner and outer peripheral surface layers of the pipe 4 through a natural reaction of the formed copper-aluminum alloy layer 4b to oxygen in atmospheric air. In this first embodiment, the two aluminum oxide passivation films 4c formed, according to the present invention, in the inner and outer surfaces of the pipe 4 will suppress oxidation of the inner surface of the hole 3a of the heat transfer body 3. Therefore, the pipe 4 press-inserted into the heat transfer body 3 provides a double passivation film formed along the inner surface of the hole 3a, thereby enhancing significantly the reliability of anti-oxidation capability.

The heater 5, which is formed in a generally bar-like shape, protrudes from an end of a grip portion of an electric soldering iron. In this first embodiment, a ceramic heater is used as the heater 5. The ceramic heater is an electric resistance heater-type heat generator using, as a heating element, a ceramic green sheet printed with a pattern of an electrically-conductive metal powder and is obtained by winding the ceramic green sheet around a ceramic core bar in a state of positioning a surface thereof printed with the pattern inwardly, and drying and sintering the obtained assembly. A leading end of the ceramic heater includes a pattern for a temperature sensor. Based on a signal from the temperature sensor, a temperature of the heat transfer body during a soldering operation is controlled to be set to a given value.

As shown in FIG. 3, the pipe 4 of the first embodiment has integrally an inwardly-extending flange 41 formed, for example, by a drawing process to have a diameter which decreases toward a distal end thereof. The inwardly-extending flange 41 serves as both a portion for partially covering a dead-end 3b of the hole 3a, and a jig-seating portion during the operation of press-fitting the pipe 4 into the hole 3a of the heat transfer body 3. The tubular-shaped substrate formed with such the inwardly-extending flange 41 enables to suppress oxidation of the dead-end 3b of the hole 3a despite of the tubular shape. In the first embodiment, a proximal end 42 of the pipe 4 is not subjected to a shape forming process. However, it may be subjected to a certain shape forming process, as described later. As used herein, the term "distal end" of the pipe 4 means a leading side of the pipe during the operation of press-fitting the pipe 4 into the hole 3a of the heat transfer body 3, whereas the term "proximal end" of the pipe 4 means an opposite (tailing) side of the distal end.

The pipe 4 is prepared by the following process. Firstly, a tube made of copper or copper alloy is cut into a given length. Then, the obtained tube is subjected to a shape forming process using a press machine or the like to form the inwardly-extending flange 41 (and a shaped portion in a proximal end of the tube, according to need), in such a manner as to allow the tube to have a shape suitable for converting the inner surface and the dead-end 3b of the hole 3a formed in the heat transfer body 3. In this manner, a tubular-shaped substrate is obtained. Subsequently, the tubular-shaped substrate is subjected to a surface modification treatment to obtain the pipe 4.

The shape forming process for the pipe 4 is performed before the surface modification treatment. This procedure of subjecting the pipe 4 to the surface modification treatment after the shape forming process makes it possible to prevent the occurrence of damage in the Cu-Al alloy during the press forming process.

The following Table 1 illustrates a difference in thermal expansion coefficient, thermal conductivity, specific heat and density between copper and stainless steel.

**TABLE 1**

| Material | Linear Expansion Coefficient (l/κ) | Thermal Conductivity [W/(m·K)) | Specific Heat [J/(kg·K)] | Density [kg/m³] |
|---|---|---|---|---|
| Copper | 16.8 × 10⁻⁶ | 403 | 385 | 8920 |
| Stainless Steel 304 | 17.3 × 10⁻⁶ | 17 | 460 | 7930 |

As shown in Table 1, there is a difference in thermal expansion coefficient between copper and stainless steel. In regard to expansion or shrinkage according to temperature changes, comparing one case where a pipe 4 made of copper is press-fitted into a heat transfer body made of copper, with another case where a pipe made of stainless steel is inserted into a heat transfer body made of copper, the stainless-steel pipe repeatedly undergoes large expansion or shrinkage. Therefore, in cases where a combination of a stainless-steel pipe and a copper heat transfer body would be employed, the pipe should be designed to have an outer diameter slightly less than an inner diameter of the hole of the heat transfer body in consideration of a difference in expansion or shrinkage between the heat transfer body and the pipe. This deteriorates in contact tightness between the pipe and a surface of the hole of the heat transfer body, which is likely to cause deterioration in efficiency of heat transfer from a heater to the heat transfer body. Moreover, a gap would occur between the pipe and the surface of the hole of the heat transfer body, which would be likely to accelerate oxidation in the surface of the hole of the heat transfer body. Furthermore, if the resulting oxide scale is removed, a diameter of the hole would be changed to cause a risk of drop-off of the pipe.

In this first embodiment, the substrate of each of the pipe 4 and the heat transfer body 3 is made of the same material, i.e. , copper. Because the pipe 4 is made of a material substantially identical to that of the heat transfer body 3 for receiving therein the pipe 4, the respective thermal expansion coefficients of the pipe 4 and the heat transfer body 3 also become approximately equal to each other. Therefore, when the heat transfer body 3 and the pipe 4 expand or shrink as the temperature changes, so do the heat transfer body 3 and the pipe 4 approximately integrally. This makes it possible to select a design scheme based on press-fitting allowing the pipe 4 to be brought into tight contact with the surface of the heat transfer body 3, so as to eliminate the risk of deterioration in efficiency of heat transfer from the heater 5 to the heat transfer body 3, and prevent the formation of oxide scales.

Further, as shown in Table 1, the thermal expansion coefficient of copper is greater than that of stainless steel, and the specific heat of copper is less than that of stainless steel. Therefore, in this first embodiment, copper is employed as a material for the tubular-shaped substrate to allow the pipe 4 to exhibit high heat transfer efficiency, as compared with case where stainless steel is employed as a material for the tubular-shaped substrate.

The press-fitting of the pipe 4 into the heat transfer body 3 is not limited to a specific operation, but may be an operation for manually performing the press-fitting on a one-by-one basis. Alternatively, the press-fitting of the pipe 4 into the heat transfer body 3 may be performed using a press-fitting apparatus 60 having a pneumatically, hydraulically, or electrically-driven cylinder.

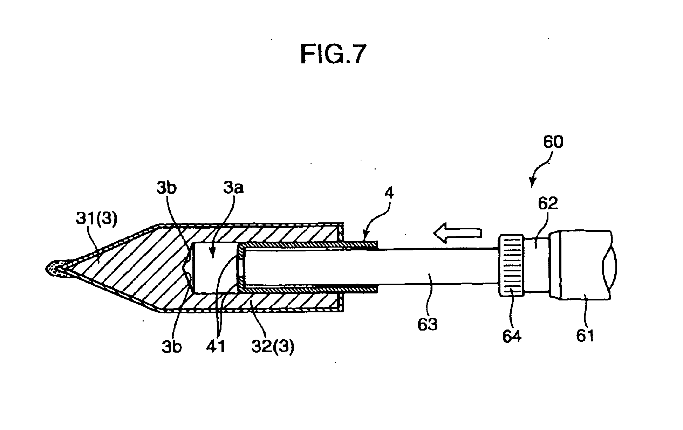

In one example illustrated in FIG. 7. a pneumatic pressure of 1 kg/cm² to 10kg/cm² is supplied from a pneumatic-pressure supply source such as a compressor (not shown) to a pneumatic cylinder 61 of the press-fitting apparatus 60 to move a pneumatic piston 62 forwardly. A pushrod 63 is connected to the pneumatic piston 62 through fastening means 64 such as a nut 64. The pushrod 63 is moved forwardly together with the pneumatic piston 62 and inserted into the pipe 4, while pushing an inner surface of the inwardly-extending flange 41 of the pipe 4 by a force of 20N or more, so that the pipe 4 is press-fitted toward the dead-end of the hole 3a of the heat transfer body 3.

The surface modification treatment for the pipe 4 will be specifically described below.

Generally, as a surface treatment method for metals, various techniques have been known: electroplating; chemical (electroless) plating; hot-dip plating; physical vapor deposition; ion plating; chemical vapor deposition; thermal spray coating; diffusion modification; or the like. Depending upon an element to be diffused, the diffusion modification further includes various treatments such as a carburizing treatment (the element to be diffused is carbon (C)), a carbonitriding treatment (the element to be diffused is carbon (C) and nitrogen (N)) a calorizing treatment (the element to be diffused is aluminum (Al)), a chromizing treatment (the element to be diffused is chromium (Cr)), a sherardizing treatment (the element to be diffused is zinc (Zn)), and a boronizing treatment (the element to be diffused is boron (B)). In regard to the diffusion modification, there is a classification by a type of medium, wherein it is classified into a gas process, a liquid process, and a solid process.

Among the above, the surface of the tubular-shaped copper substrate in this first embodiment is subjected to a calorizing treatment (aluminizing treatment) based on a pack cementation process to modify the surface to a Cu-Al alloy layer, and then an aluminum oxide passivation film is formed in the Cu-Al alloy layer through a reaction with oxygen in atmospheric air to obtain the pipe 4.

The pack cementation process comprises putting a penetrant as an element source (an aluminum powder or aluminum-containing alloy particles), an anti-sintering material (such as alumina, silica, kaolin, iron, iron-cobalt alloy, iron-aluminum alloy or aluminum-containing alloy) and an activator (such as NH₄F, NH₄Cl, NR₃I, NaF, AlF₃, AlCl₃, NH₄Br, or MgF₂), into a container in the form of a pack mixture, and embedding a treatment target in the pack mixture, and heating the pack mixture with the target at a high temperature in the container filled with an inert gas. In this manner, aluminum is evenly diffused based on vapor phase diffusion of aluminum halide gas formed through a chemical reaction under the high temperature in addition to diffusion of solid aluminum directly from the aluminum powder (see U.S. Patent No. 3,096,160). The surface modification treatment for the tubular-shaped substrate using the pack cementation process is a thermal diffusion treatment, which provides an advantage of being free of pinholes.

In the first embodiment, the generally tubular-shaped pipe 4 having a through-hole is subjected to the surface modification treatment. Therefore, as compared with a technique of subjecting a surface of the concave-shaped non-through-hole 3a formed in the heat transfer body 3 is subjected to the surface modification treatment, gas supplied into the tubular-shaped substrate during the surface modification treatment smoothly flows therethrough without stagnation of the gas flow. This makes it possible to homogenously surface-modify the pipe 4 in an easy manner.

### (Second Embodiment)

In the first embodiment, the aluminum oxide film of the pipe for electric soldering device is formed through a natural reaction of oxygen in atmospheric air to a surface-modified layer which is obtained by an aluminizing treatment based on a pack cementation process. In a second embodiment of the present invention, an aluminum oxide film of a pipe is formed through a natural reaction of oxygen in atmospheric air to a surface-modified layer which is obtained by an aluminizing treatment based on a slurry coating process.

The slurry coating process is one type of diffusion treatment process which comprises applying a slurry mixture of an aluminum powder; an activator and a binder onto a treatment target, and then subjecting the target to a heating treatment in an inert gas atmosphere at a high temperature (see U.S. Patent No. 7,030,339). The surface modification treatment for a tubular-shaped substrate using the slurry coating process has an advantage of being able to be performed using a small-scale facility without a need for a large-scale facility, as compared with the surface modification treatment based on the pack cementation process.

In the slurry coating process, a slurry mixture obtained by kneading aluminum (Al) particles and fluoride-based flux together with a binder is firstly applied onto the entire outer and inner surfaces of a tubular-shaped substrate made of copper and formed in a given shape, and dried. Then, after completion of the drying, the tubular-shaped substrate is subjected to a heating treatment in an inert gas atmosphere. Through the heating treatment, only the Al particles are melted to modify each of the surfaces of the tubular-shaped substrate to a layer with a high Al concentration.

In the first and second embodiments, the pipe 4 having the aluminum oxide passivation film 4c formed, according to the present invention, on each of the inner and outer peripheral surfaces of the tubular-shaped copper or copper alloy substrate is press-fitted, according to the present invention, into the hole 3a formed in the heat transfer body 3. Therefore. even if the heat transfer body 3 would continuously receive high-temperature heat energy from the heater 5, the extremely stable aluminum oxide passivation film 4c formed on the surface of the pipe 4 would be able to suppress oxidation in the inner surface of the hole 3a of the heat transfer body 3. In addition, because the tubular-shaped substrate is made of copper having a high thermal conductivity, heat generated by the heater 5 is efficiently conducted to the heat transfer body 3 via the pipe 4. This makes it possible to suppress oxidation of the heat transfer body 3 while maintaining high heat transfer efficiency. More specifically:
(1) Oxidation resistance of the heat transfer body 3 is significantly improved, and therefore almost no oxide scale is formed even if the heat transfer body 3 is heated at a temperature of 600° C in atmospheric air for 1 hour. Although a temperature of a soldering iron during use is typically 400°C or less, a rise in temperature of the heater 5 would likely to be up to about 500° C. Even in such a case, the pipe 4 having the aluminum oxide film formed on the copper surface thereof can sufficiently fulfill a function of preventing oxidation of the heat transfer body 3.
(2) The improvement in heat transfer efficient makes it possible to simplify and facilitate a temperature control of the heat transfer body 3 during a soldering operation, as compared with a heat transferring member using a stainless-steel pipe.
(3) In the heat transfer body 3 having the copper pipe 4 subjected to the surface modification treatment and press-fitted thereinto, heat from the heater 5 is transferred with less heat loss, so that the temperature of the heat transfer body 3 is quickly recovered at start of use and during use.

As compared with conventional Sn-Pb eutectic solder, lead-free solder which has been recently becoming popular, such as Sn-Ag-Cu alloy solder, Sn-Cu alloy solder, or Sn-Ag alloy solder, has a higher melting temperature, and more quickly erodes a soldering device or tool due to a higher content of tin (Sn) . In this situation, the use of the electric soldering iron having high heat transfer efficiency, according to each of the above embodiments, makes it possible to facilitate a soldering operation using the lead-free solder to enhance soldering performance of an electric soldering iron.

In the conventional art, the inner surface of the hole 3a formed in the heat transfer body 3 is subjected directly to a modification treatment. Therefore, a chromized layer formed on an outer surface of the heat transfer body 3 is changed in color due to high-temperature heating of the heat transfer body 3 for the modification treatment to cause a problem of reduction in commercial value of the heat transfer body 3. In the above embodiments, however, the pipe 4 is subjected to the surface modification treatment, and therefore the surface modification treatment is unnecessary to the heat transfer body, the problem of change in color of the chromized layer can be avoided.

### (Third Embodiment)

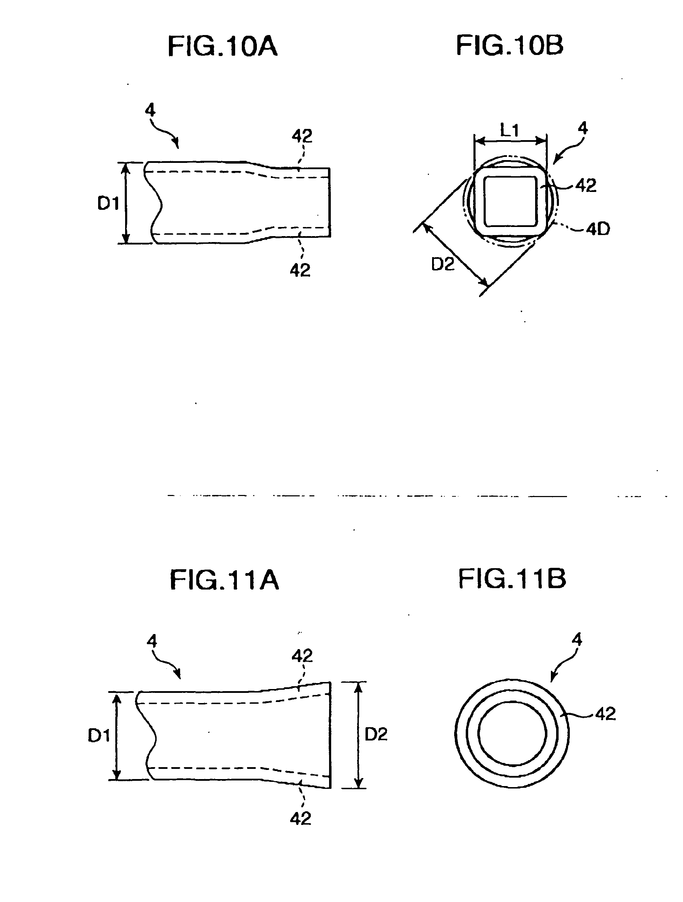

While the proximal end of the pipe 4 in the first and second embodiments is not particularly subjected to a shape forming process as shown in FIGS. 5A and 5B, the pipe 4 may have a proximal end formed in a generally rectangular shape (one example of a polygonal shape) in transverse cross-section as shown in FIGS. 10A and 10B.

In FIGS. 10A and 10B, the proximal end of the pipe 4 is formed in a square shape. A length L1 on the side of the square shape is set to be less than the inner diameter D0 (see FIG. 1) of the hole 3a formed in the heat transfer body 3, and a diameter D2 of a circumscribed circle 4D about the square shape is set to be slightly greater than the inner diameter D0 (see FIG. 1) of the hole 3a formed in the heat transfer body 3. Further, the pipe 4 is formed to satisfy the following relation: D2 > D1 = D0 > L1, wherein D1 is an outer diameter in an intermediate portion of the pipe 4.

When the pipe 4 illustrated in FIGS. 10A and 10B is press-fitted into the hole 3a formed in the heat transfer body 3, four corners of the proximal end of the pipe 4 or corners having a maximum outer diameter (the diameter D2 of the circumscribed circle 4D) bite into the inner surface of the hole 3a of the heat transfer body 3 in a wedgewise manner to allow the pipe 4 to be fixedly engaged with the heat transfer body 3 by a strong press-contact force. This makes it possible to achieve a reliable contact between the heat transfer body 3 and the pipe 4, while reducing frictional resistance in portions other than the corners having a maximum outer diameter, during the press-fitting.

The configuration of the proximal end of the pipe 4 may be any suitable shape other than a rectangular shape, such as pentagonal, hexagonal, or octagonal shape.

### (Fourth Embodiment)

As shown in FIGS. 11A and 11B, a pipe 4 may be employed in which a proximal end thereof is formed in a flared shape to have an outer diameter which increases toward an upstream thereof.

The proximal end of the pipe 4 illustrated in FIGS. 11A and 11B is formed in a flared shape spread out toward the proximal end of the pipe 4. In this mode, given that an outer diameter of the proximal end of the pipe 4 is D2, the diameter D2 of the proximal end of the pipe 4 is set to be greater than the inner diameter D0 of the hole 3a of the heat transfer body 3, and the pipe 4 is further formed to satisfy the following relation: D2 > D1 = D0, wherein D1 is an outer diameter in an intermediate portion of the pipe 4.

In the pipe 4 having the proximal end formed in a flared shape spread out toward the proximal end of the pipe 4, when the pipe 4 is press-fitted into the hole 3a, a contact between an outer surface of the pipe 4 and the inner surface of the hole 3a of the heat transfer body 3 becomes tighter in a portion the flared end of the pipe 4 on the side of the leading end thereof to ensure large press-fitting resistance. This makes it possible to improve the heat transfer efficiency.

### (Fifth Embodiment)

The first to fourth embodiments have been described based on one example where the heat transfer body 3 comprises the pointed head portion 31 to be coated with solder and the sleeve portion formed with the hole 3a for receiving therein the pipe 4 and integrated with the pointed head portion 31a. However, the present invention is not limited thereto, but each of the pointed head portion 31 and the sleeve portion 32 may be formed as an independent or separate component.

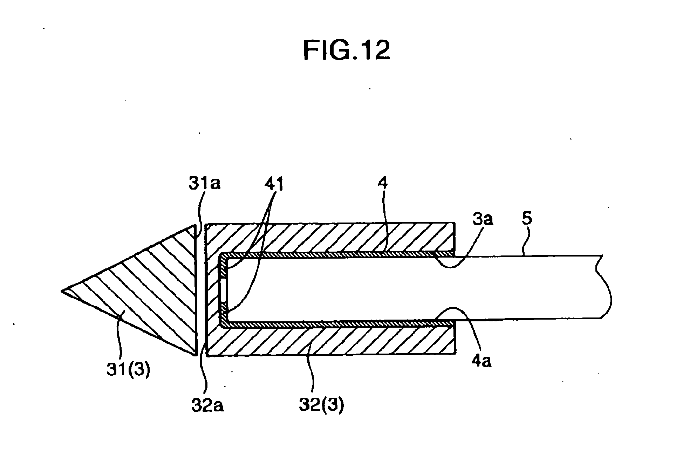

Referring to FIG. 12, an electric soldering iron according to a fifth embodiment of the present invention comprises a heat transfer body 3 which has a pointed head portion 31 and a heat transfer sleeve portion 32 in a separable manner, wherein only the pointed head portion 31 serving as a iron tip is replaceable as a consumable component. In this configuration, the heat transfer sleeve 32 also has a hole 3a formed therein. A pipe 4, such as the pipe 4 in the first embodiment, is also inserted into the hole 3a of the heat transfer sleeve portion 32 to receive a heater 5 in order to prevent oxidation of an inner surface of the hole 3a. The electric soldering iron illustrated in FIG. 12 is configured such that the pointed head portion 31 is pressed against the heat transfer sleeve portion 32 by a protective pipe (not shown) having an inner flange to allow a contact surface 32a of the heat transfer sleeve portion 32 to be brought into contact with a contact surface 31a of the pointed head portion 31 so as to conduct heat of the heater 5 to the pointed head portion 31 via the heat transfer sleeve portion 32. A coupling between the pointed head portion 31 and the heat transfer sleeve portion 32 may be a mutual coupling using a screw structure.

### [ELECTRIC DESOLDERING TOOL]

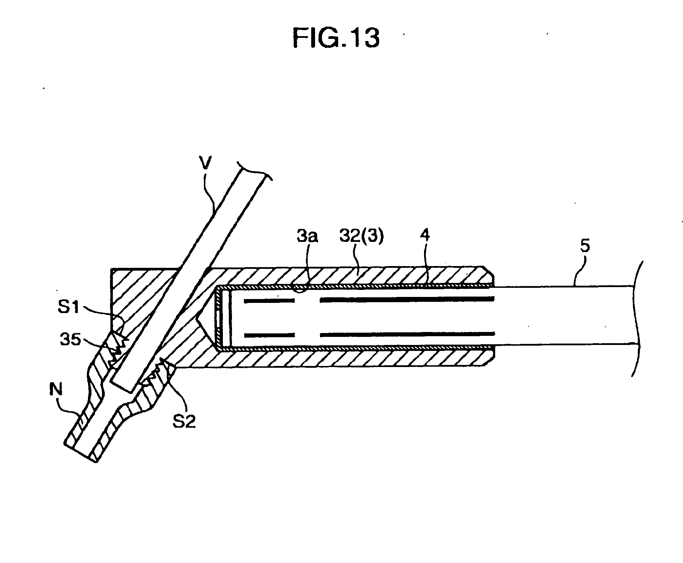

The first to fifth embodiments have been described based on one example where the pipe 4 is applied to an electric soldering iron. However, the present invention is not limited thereto but may be applied to an electric solder-sucking device or electric desoldering tool for melting solder and removing the melted solder, as shown in FIG. 13.

### (Sixth Embodiment)

Referring to FIG. 13, in an electric desoldering tool according to a sixth embodiment of the present invention, a sleeve-shaped heat transfer body 3 is formed in a sleeve shape devoid of a pointed head portion, and a solder-sucking nozzle (sucking member) N is provided to a leading end of the heat transfer body 3. The leading end of the heat transfer body 3 is formed with a cylindrical-shaped screw portion 35. and the solder-sucking nozzle N is screwed with the screw portion 35 and coupled to the heat transfer body 3 in such a manner that a contact surface S1 of the nozzle N is brought into close contact with a contact surface S2 of the heat transfer sleeve portion 32. The heat transfer body 3 has a sucking pipe (sucking member) V connected thereto and inserted into the nozzle N after penetrating through the screw portion 35 to allow molten solder to be sucked from a free end of the nozzle N by a negative pressure from vacuuming means (not shown).

Further, as shown in FIG. 13, a pipe 4 equivalent to the pipe 4 in the first embodiment is press-fitted into a hole 3a provided in the heat transfer sleeve portion 32 of the heat transfer body 3.

In the sixth embodiment, an aluminum oxide film of the press-fitted pipe 4 also makes it possible to drastically improve oxidation resistance of the heat transfer body 3, while maintaining efficiency of heat transfer from a heating member to the heat transfer sleeve portion 32.

### (MODIFICATIONS)

Although the first to sixth embodiments have been described based on one example where a ceramic heater is used as the heater 5, the present invention is not limited thereto but a sheathed electric resistance heater may be used as the heater 5.

Although the first to sixth embodiments have been described based on one example where a temperature of the electric soldering iron or the electric desoldering tool is ON-OFF controlled, the present invention is not limited to such ON-OFF control. For example, the temperature of the electric soldering iron or the electric desoldering tool may be controlled by continuously changing an amount of supply current.

Although the first to sixth embodiments have been described based on one example where the copper surface is subjected to an aluminizing treatment using a pack cementation process or a slurry coating process, the present invention is not limited thereto. For example, the aluminizing treatment may be a diffusion treatment comprising immersing a target into molten aluminum and then subjecting the resulting target to a heat treatment at a high temperature (see U.S. Patent No. 4,517,229).

Although the first to sixth embodiments have been described based on one example where the tubular substrate is made of pure copper, such as oxygen-free copper, the present invention is not limited thereto, but the tubular substrate may be made of a copper alloy, such as silver-containing copper or copper-iron alloy.

### [EXAMPLES]

The present invention will be more specifically described below based on various examples. It is understood that the present invention is not limited to such examples, but various changes and modifications may be made without departing from the scope of the present invention as defined in the appended claims.

### Example 1: Surface Modification Treatment in First Embodiment

20 weight% of aluminum power as an element source, 79.5 weight% of alumina particles as an anti-sintering agent and 0.5 weight% of ammonium chloride (NH₄Cl) were charged into a container in the form of a pack mixture.

A tubular-shaped substrate made of oxygen-free copper, as a treatment target, was embedded in the pack mixture, and the container was filled with argon (Ar) gas to remove air including oxygen. Then, the target embedded in the pack mixture was subjected to a heating treatment at a temperature of 500°C to 600°C for 15 hours.

In the above manner, aluminum was diffused in a surface of the tubular-shaped substrate made of copper to form a Cu-Al layer (copper-aluminum alloy layer) with a high concentration of aluminum.

Subsequently, the treatment target was taken out of the container, and exposed to atmospheric air to naturally form a dense aluminum oxide (Al₂O₃) layer through a natural reaction of oxygen in atmospheric air to aluminum in an outermost surface of the Cu-Al alloy layer. The formed oxide layer will prevent subsequent oxidation of the tubular-shaped substrate.

A particle size of the aluminum (Al) powder is preferably 50µm or more in view of anti-ignition, more preferably 150µm or less for a reason of maximizing a contact with the treatment target to facilitate the diffusion. Preferably, an amount of oxygen contained in the aluminum (Al) powder is 1 weight% or more. The particle size and the oxygen content of the aluminum (Al) powder thus specified to the above range ensure properties of the aluminum (Al) powder suitable as a surface of a pipe 4.

In Example 1, alumina particles were used as an anti-sintering agent. Alternatively, pulverized particles of Fe-Al alloy may be used as the anti-sintering agent. In the case of using the pulverized particles of Fe-Al alloy, it may also be used as an element source, or an aluminum powder may be additionally used as the element source in combination with the pulverized particles of Fe-Al alloy. Particularly, when an amount of aluminum (Al) contained in the Fe-Al alloy is in the range of 19 weight% to 50 weight%, aluminum (Al) can be accumulated in the anti-sintering agent at a high concentration in the form of an alloy to efficiently serve as a medium for assisting solid-solid diffusion of aluminum into the treatment target.

Even if an iron-based material is used as a medium material for mediating diffusion or penetration of aluminum into a copper product, the formation of an intermediate phase, such as FeAl₃, is suppressed. The reason of this is that a vapor pressure of aluminum (Al) or aluminum chloride gas is fairly greater than that of iron (Fe) or iron chloride gas, whereas a vapor pressure in equilibrium with an element source powder is close to a vapor pressure of pure aluminum (Al), and thereby an element being vaporized/gasified within a furnace at a treatment temperature is only aluminum and aluminum chloride gas.

As the antl-sinterlng agent, a pulverized material having a particle size of about 500µm to 5000pm may be used. The use of the anti-sintering agent having such a particle size makes it possible to ensure an interspace suitable for allowing aluminum chloride gas in the vapor phase to pass through the anti-sintering agent.

Such diffusion or penetration is caused by a direct solid-solid reaction and the following chemical reaction with a vapor phase, to form a diffused alloy layer having relatively excellent homogeneity.
First Stage: Activation of Halide

Ammonia chloride (NH₄Cl) is used as an activator to produce hydrogen chloride gas by thermal decomposition of the activator, and the hydrogen chloride gas reacts with an aluminum metal powder in a penetrant as a metal halide to produce aluminum chloride gas.

NH₄Cl - - NH₃ + HCl

3HCl + At → AlCl₃ + 3 / 2 H₂

Second Stage: Deposition of Active Metal

The activated aluminum chloride gas is filled in an interspace of solid alumina to cause deposition of active aluminum metal on a surface of a treatment target (copper).

AlCl₃ +3/2 Cu → 3/2 CuCl₂ + Al (substitution reaction)

AlCl₃ +3/2 H₂ → 3 HCl + Al (reduction reaction)

AlCl₃ → 3/2 Cl₂ + Al (thermal decomposition reaction)

Third Stage: Thermal Diffusion

The active aluminum metal deposited on the surface of the treatment target (copper) is diffused in the copper (Cu) to form a Cu-Al alloy layer.

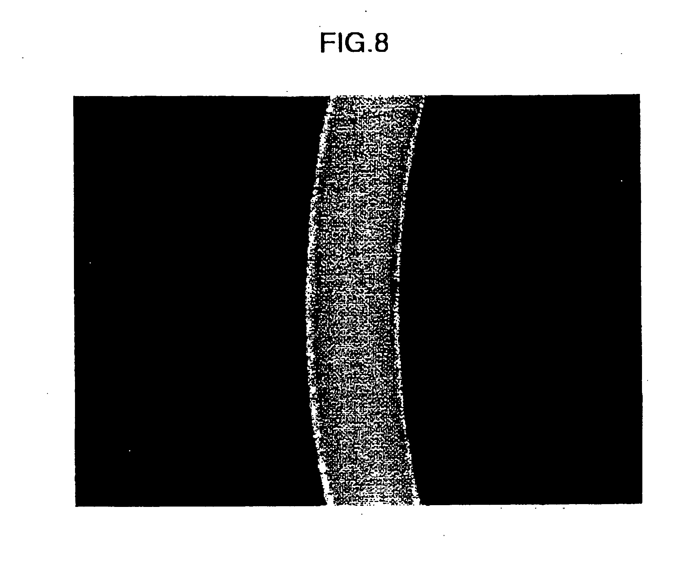

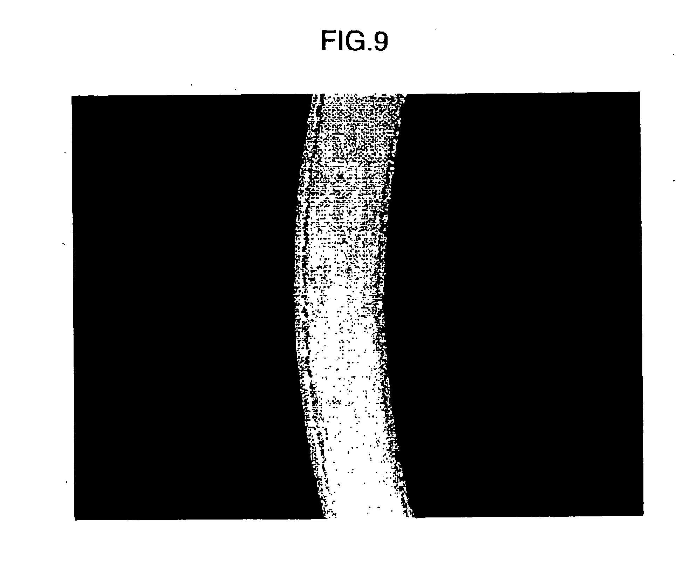

FIGS. 8 and 9 are photographs representing an enlarged cross-section of a tubular-shaped cupper substrate, which shows a thickness of a Cu-Al alloy layer obtained by diffusing aluminum (Al) in a surface of the tubular-shaped cupper substrate using a pack cementation process, wherein FIG. 8 is a photograph representing an enlarged cross-section of an intermediate region of the tubular-shaped substrate, and FIG. 9 is a photograph representing an enlarged cross-section of a proximal end region of the tubular-shaped substrate.

Each of the photographs in FIGS. 8 and 9 shows a microscopic measurement result of a thickness of a Cu-Al alloy layer in a cut surface of a pipe 4 after being subjected a pack cementation process The pipe 4 as a sample was obtained in such a manner that a tubular-shaped oxygen-free copper substrate having an outer diameter f of 4.4 mm and a leading end subjected to a drawing process is embedded in a pack mixture comprising 20% of aluminum (Al) and 0.5% of ammonia chloride (NH₄Cl), in a laid-down posture, and the pack mixture is subjected to a heating treatment in an argon (Ar) gas at a temperature of 500°C within a small electric furnace.

In the proximal end region of the pipe 4, the thickness of the Cu-Al alloy layer is about 25µm in an outer peripheral surface of the pipe 4, and about 20µm in an inner peripheral surface of the pipe 4. In the intermediate region of the pipe 4, the thickness of the Cu-Al alloy layer is about 25µm in the outer peripheral surface of the pipe 4, and about 15µm in the inner peripheral surface of the pipe 4. These results show that the thickness of the Cu-Al alloy layer formed on an inner peripheral surface of the tubular-shaped substrate is less than that of the Cu-Al alloy layer formed on an outer peripheral surface of the tubular-shaped substrate. A state of gas flow during the heat treatment is different between an inside and an outside of the tubular-shaped substrate, and thereby the thickness of the Cu-Al alloy layer formed in the inner peripheral surface of the pipe 4 becomes slightly less than that of the Cu-Al alloy layer formed in the outer peripheral surface of the pipe 4. Even in this situation, a Cu-Al alloy layer having a thickness enough to form an aluminum oxide passivation film can be obtained on both inner and outer surfaces of the tubular-shaped substrate.

### Example 2: Aluminizing Treatment based on Slurry Coating Process

Example 2 is a specific example of an aluminizing treatment based on a slurry coating process in the second embodiment.

In Example 2, a mixture of 80 weight% of aluminum (Al) particles and 20 weight% of flux was kneaded together with a binder to obtain a slurry mixture. Then, the slurry mixture was applied onto both outer and inner peripheral surfaces of a tubular-shaped copper substrate to have a thickness of 2 mg/cm² to 5 mg/cm². Then, the tubular-shaped copper substrate was subjected to a heating treatment within a nitrogen gas atmosphere at 700°C to melt aluminum (Al) , Although a Cu-Al based alloy is melted by a eutectic reaction at 548° C, aluminum (Al) is diffused in this treatment under a condition that a rise in treatment temperature is up to a melting point of aluminum (Al) or 660°C or more in order to produce a sufficient reaction between aluminum (Al) and copper (Cu). Subsequently, the treatment target was taken out of the furnace, and cooled naturally. During the cooling, an aluminum oxide (Al₂O₃) passivation film is formed through a reaction of oxygen in atmospheric air to aluminum (Al) in a modified layer in a surface of the treatment target.

Preferably, a particle size of the aluminum (Al) particles is 150µm or less, and an amount of oxygen contained in the aluminum (Al) particles is 1 weight% or less. The particle size and the oxygen content of the aluminum (Al) powder are specified to the above range to ensure properties of the aluminum (Al) powder suitable as a surface of a pipe 4.

As the flux, Halide, such as ammonium fluoride (NH₄F) or ammonia chloride (NH₄CL) may be used.

### COMPARISON TEST ON OXIDATION RESISTANCE

FIG. 6 is a graph showing a test result, wherein an amount of oxide on a heat transfer body 3 in which the pipe 4 with the copper surface modified in Example 1 is press-fitted into a hole 3a of the heat transfer body 3, is compared with an amount of oxide on a heat transfer body having a hole with a non-treated surface. More specifically, each of a heat transfer body 3 having a pipe 4 subjected to a surface modification treatment and press-fitted therein, and a heat transfer body formed with a hole 3a having neither the pipe 4 inserted therein nor a surface subjected to a surface modification treatment, was heated for 1 hour while gradually increasing a test temperature to 300°C, 400° C, 500° C, and 600°C in atmospheric air within a furnace. After the heating, a weight of each of the heat transfer bodies as a sample was measured using a precision balance. The graph in FIG. 6 represents an increase in weight as an increase in amount of oxide. As seen in FIG. 6, the weight of oxide in the heat transfer body having the hole 3a with a non-treated surface was sharply increased when the test temperature becomes greater than 300°C. In contrast, the weight of oxide is barely included in the heat transfer body 3 where the pipe 4 with the copper surface modified to have an aluminum oxide passivation film as in the above embodiments is press-fitted into the hole 3a of the heat transfer body 3, even if the test temperature becomes greater than 300°C.

As above, the use of the pipe 4 having an aluminum oxide passivation film formed in the surface thereof makes it possible to suppress oxidation in the surface of the hole 3a of the heat transfer body 3 even under high-temperature environments. Even if the aluminum oxide passivation film be damaged, a natural film of aluminum oxide would be quickly re-formed when the Cu-Al alloy layer is exposed to atmospheric air to maintain oxidation resistance.

### COMPARISON TEST ON HEAT TRANSFER EFFICIENCY

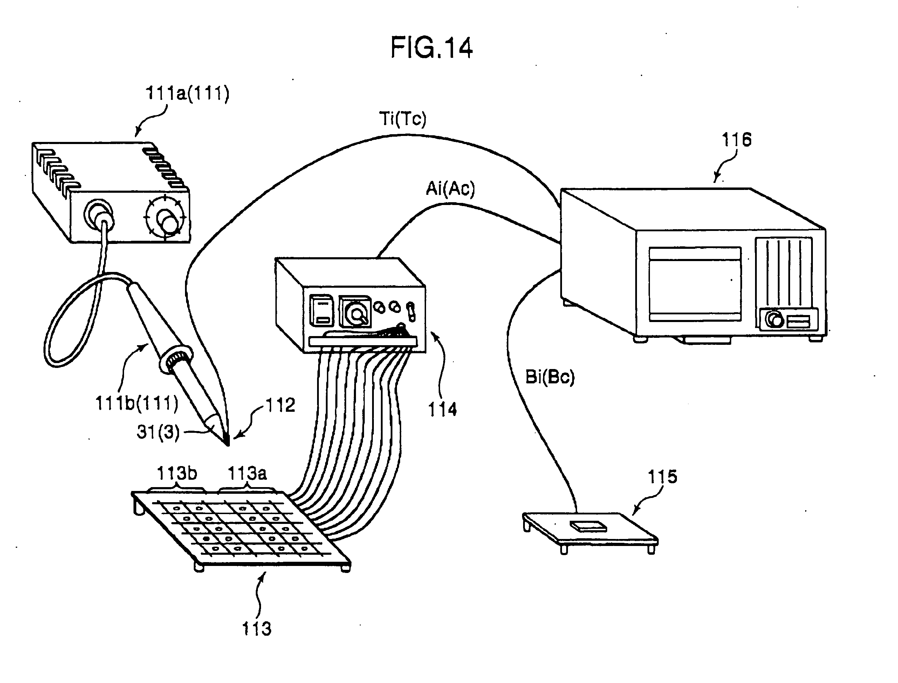

A comparison test on heat transfer efficiency between an electric soldering iron (heat transferring member) using the pipe subjected to the surface modification treatment in Example 1 and an electric soldering iron (heat transferring member) using a conventional stainless-steel insert pipe has been carried out. In the heat-transfer-efficiency comparison test, a "multiple-workpiece test" and "large-workpiece test" were carried out using a test apparatus illustrated in FIG. 14. The "multiple-workpiece test" is intended to evaluate heat transfer efficiency in a soldering operation for a large number of workpieces requiring a small or intermediate heat capacity. The "large-workpiece test" is intended to evaluate heat transfer efficiency in a soldering operation for a workpieces requiring a large heat capacity.

### (Test Apparatus)

FIG. 14 is a diagram for explaining a test apparatus for use in measuring a change in temperature of an iron tip and a change in detection temperature of a soldering target. The test apparatus comprises a soldering device 111, a multiple-workpiece test board 113, a controller 114, a large-workpiece test board 115, and a recorder 116.

The soldering device III includes a temperature control unit 111a, and an electric soldering iron 111b (used in each of inventive and comparative examples).

Based on a detection signal from a temperature sensor installed inside a ceramic heater and in consideration of a difference between respective temperatures in a predetermined sensor position and in a soldering operation area of a pointed head portion (iron tip) of a heat transfer body 3, the temperature control unit 111a is operable to ON-Off control a current to be supplied to the heater in such a manner that the temperature in the operation area of the pointed head portion 31 becomes equal to a given temperature.

The electric soldering iron 111b has a fundamental structure approximately identical to that of the electric soldering iron illustrated in FIG. 19 using a ceramic heater (not shown) as a heating member, and includes a heat transferring member in a replaceable manner. Using the soldering iron 111b, both the heat transferring members in Example 1 and comparative example were subjected to "multiple-workpiece" and "large-workpiece" tests which were conducted continuously. The temperature of the pointed head portion (hereinafter referred to as "soldering-tip temperature" on a case-by-case basis) was measured by a chromel-alumel thermocouple. The chromel-alumel thermocouple has a temperature-measuring portion 112 arranged to be in contact with a vicinity of the operation region of the pointed head portion so as to directly measure the soldering-tip temperature. The temperature-measuring portion 112 is electrically connected to the recorder 116 to output a detection signal to the recorder 116.

The multiple-workpiece test board 113 is formed by simulating a large number (twenty in this test apparatus) of workpieces requiring a small or intermediate heat capacity. In this test, first and second multiple-workpiece test boards 113a and 113b each having a different size were used.

The first multiple-workpiece test board 113a is a printed-wiring board of double-sided copper-clad laminate made from woven glass fiber material impregnated with epoxy resin, and having a size of 110 mm length. 111 mm width, and 2 mm thickness. A copper foil on each surface thereof is divided by etching into a plurality of square sections, each 10 mm on a side. A cylindrical through-hole pin having an outer diameter f of 1,5 mm is fixed at a center of each of the divided small sections penetrating through the board, and ten soldering-tip contact sections (simulated workpieces) each made of copper and formed to have a diameter f of 2.0 mm are provided on an upper surface of the board. The second multiple-workpiece test board 113b is a printed-wiring board of double-sided copper-clad laminate made from woven glass fiber material impregnated with epoxy resin, which is prepared by changing a value of each of the outer diameter of the cylindrical through-hole pin and the diameter of each of the copper soldering-tip contact sections in the first multiple-workpiece test board 113a. Specifically, the outer diameter f of the cylindrical through-hole pin is 2.0 mm, and the diameter of each of the ten copper soldering-tip contact sections is 3.0 mm. A temperature-measuring chromel-alumel thermocouple is provided on a back side of each of the test boards 113a and 113b, with respect to each of the soldering-tip contact sections, and connected to the controller 114.

The controller 114 is operable to recognize respective detection signals from the plurality of chromel-alumel thermocouples provided in the multiple-workpiece test board 113, and ultimately output a single sequential temperature signal to the recorder 116 while arranging respective temperature signals of the first and second multlple-workpiece test boards 113a and 113b in order of measurement timing.

The large-workpiece test board 115 is formed by simulating a large workpiece requiring a large heat capacity. The large-workpiece test board 115 comprises a ceramic board having a size of 100 mm length, 40 mm width and 5 mm thickness. A copper bar formed to have an outer diameter of 6 mm and a length of 1.0 mm is fixed to a center of the ceramic board. A soldering-tip contact portion, formed as an oblong-shaped copper plate having a size of 10 mm length, 5 mm width, and 2 mm thickness, is mounted on an upper surface of the board. A temperature-measuring chromel-alumel thermocouple is attached to a back side of the large-workpiece test board 115 to output a temperature signal of the large-workpiece test board 115, and directly connected to the recorder 116.

The recorder 116 is a processing unit comprising a display for displaying a wavy line based on the detection signal input from the controller 114 or the large-workpiece test board 115, and operable to store data about a result based on the input signal, in a given storage device, and output the data (e.g., print out the data or transmit the data via a communication line).

### (Test Target)

As the inventive example, a pipe 4 was prepared by subjecting a surface of a tubular-shaped copper substrate of a heat transfer body identical to that described in the first embodiment, to a calorizing treatment (aluminizing treatment) based on the pack cementation process described in Example 1 to modify the surface to a Cu-Al alloy layer, and forming an aluminum oxide passivation film in the Cu-Al alloy layer through a reaction with oxygen in atmospheric air, and then the obtained pipe 4 was assembled to the heat transfer body 3 through the press-fitting operation described in connection with FIG. 7 to obtain a heat transferring member 3.

As the comparative example, there is prepared a heat transferring member different from the heat transferring member 3 in the inventive example, in that the pipe 4 is made of stainless steel (i.e., without an aluminum film and an aluminum oxide passivation film).

### (Test Procedure)

A state of soldering using lead-free solder was created in a mock manner, as follows.

In a soldering operation using lead-free solder, a soldering-tip temperature of a soldering iron is typically controlled to be about 350°C. A soldering-tip temperature of the soldering iron 111b thus rose up to 350° C, while being calibrated, to set a heating condition. More specifically, an operator adjusted a setting value of the temperature control unit 111a by gradually raising a control level of the temperature control unit 111a to allow a temperature value from the thermocouple 112 attached to the pointed head 31 of the heat transfer body 3 to become equal to 350°C in a no-load state, while checking a soldering-tip temperature based on a detection signal of the temperature-measuring portion 112. by the display of the recorder 116.

After completion of the setting of the temperature control unit 111a, the operator turned off a power switch of the electric soldering iron to lower the soldering-tip temperature to a given value (50°C in this test)

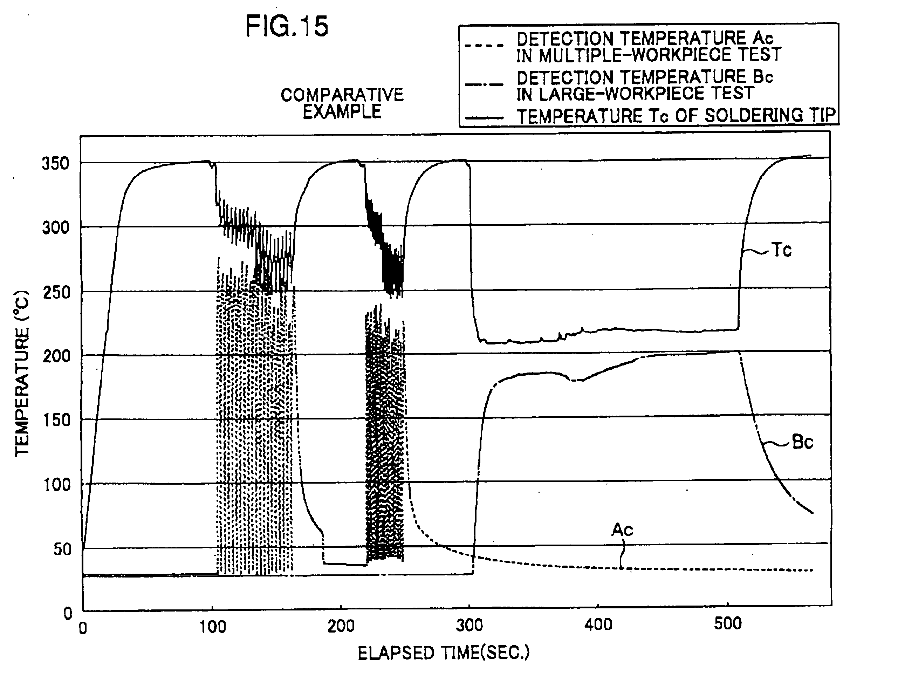

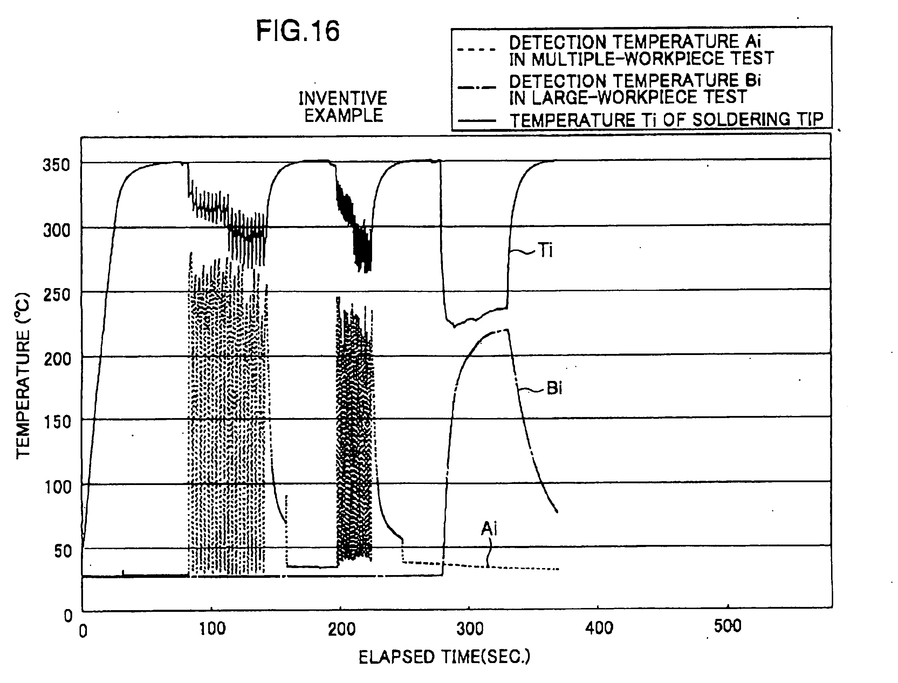

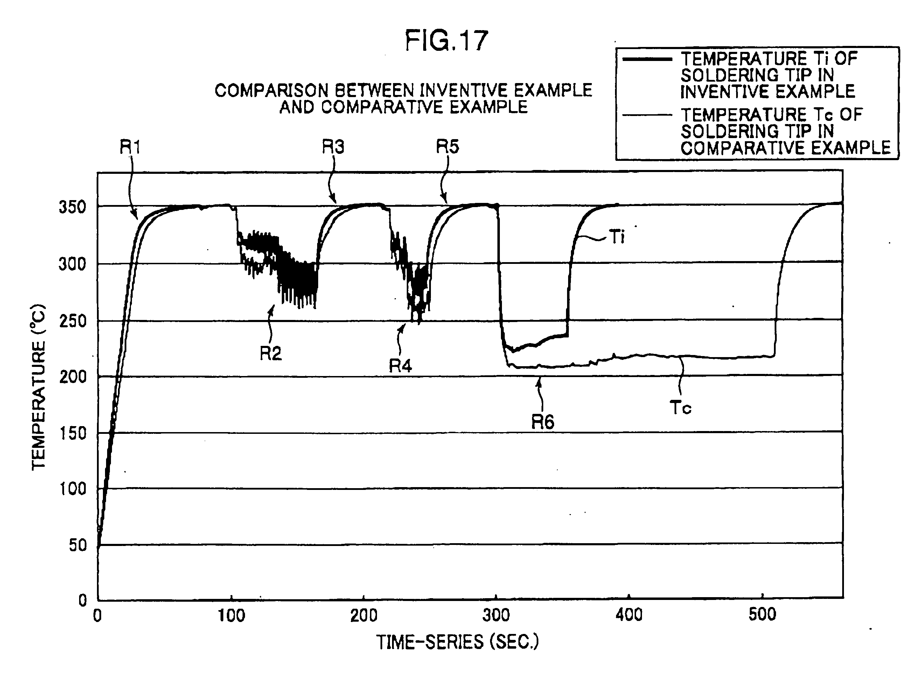

After checking that the soldering-tip temperature of the electric soldering iron lowered the given value, the operator tuned on a switch of the recorder 116 to start recording temperature data, based on the setting of the temperature control unit 111a. FIGS. 15 to 17 are based on this record. In FIGS. 15 to 17, each of the lines Ai and Ac designates a detection temperature during the multiple-workpiece test, and each of the lines Bi and Bc designates a detection temperature during the large-workpiece test. Further, each of the lines Ti and Tc designates a soldering-tip temperature. In these lines, the suffix i and the suffix c designate the inventive example and the comparative example, respectively. In a state after starting the recording of temperature data, the power switch of the electric soldering iron was turned on again to raise the soldering-tip temperature up to 350° C (characteristic of the region R1 in FIG. 17) .

After checking that the soldering-tip temperature reaches 350° C, the operator started the multiple-workpiece test. Firstly, the operator placed the pointed head portion 31 of the heat transfer body 3 on a first one of the soldering-tip contact sections of the first multiple-workpiece test board 113a. In this state, the operator waited until a detection temperature Ac of the test board 113 reaches 250°C. After checking that the detection temperature Ac of the test board 113 reached 250° C, the operator moved the pointed head portion 31 to a second one of the soldering-tip contact sections. The above operations were repeated for all of the ten soldering-tip contact sections of the first multiple-workpiece test board 113a (characteristic of the region R2 in FIG. 17).

After completion of the heat-transfer-efficiency comparison test for the ten soldering-tip contact sections of the first multiple-workpiece test board 113a, the operator successively performed the multiple-workpiece test for the second multiple-workpiece test board 113b in the same manner as that for the first multiple-workpiece test board 113a (characteristic of the region R4 in FIG. 17).

Then, after completion of the multiple-workpiece test for the twenty soldering-tip contact sections of the multiple-workpiece test boards 113a and 113b in total, the operator waited until the soldering-tip temperature is recovered to 350°C in the no-load state (characteristic of the region R5 in FIG. 17).

After the recovery, the comparison test was shifted to the large-workpiece test. In the large-workpiece test, the pointed head portion 31 of the heat transfer body 3 was placed on the soldering-tip contact portion of the large-workpiece test board 115 until a detection temperature reached 200°C. After checking that the temperature of the large-workpiece test board 115 reached 200° C, the pointed head portion 31 of the heat transfer body 3 was moved away from the soldering-tip contact portion, and a change in temperature was recorded (characteristic of the region R6 in FIG. 17).

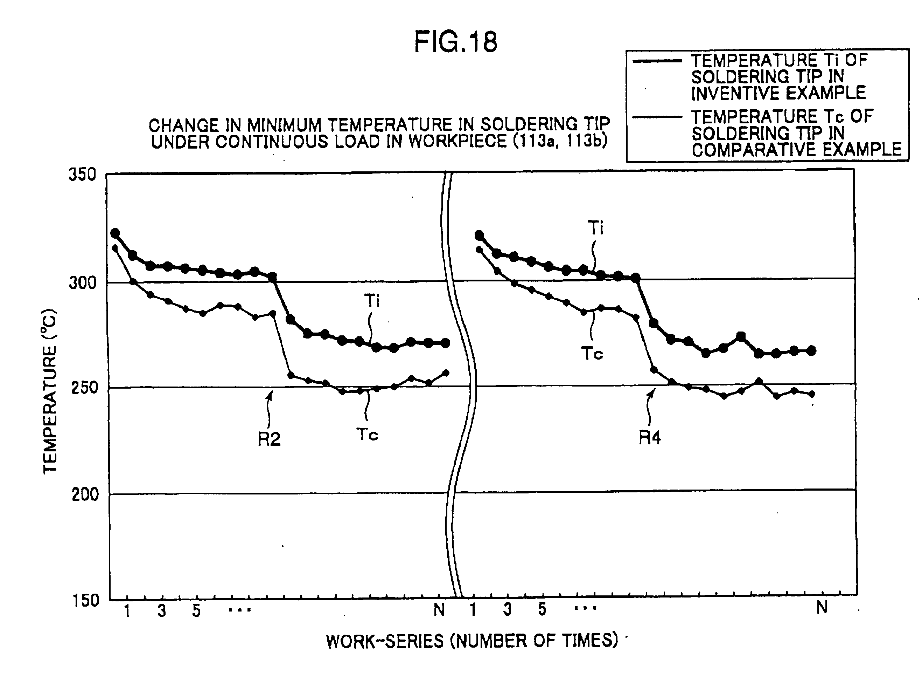

FIG. 18 is a graph for comparing between the inventive example and the comparative sample as to the characteristic of the regions R2 and R4 in FIG, 17 In FIG. 18, each of the lines Ti, Tc indicates a soldering-tip temperature, and the suffix i and the suffix c indicate the inventive example and the comparative example, respectively.

In accordance with the above steps, the "multiple-workpiece" and the "large-workpiece" tests were conducted for each of the inventive example and the comparative example

### (Measurement Result)

### WARM-UP TIME IN INITIAL RISING

Referring to FTGS. 15 to 17, the inventive and comparative examples are different from each other in a rising speed (increasing rate) of the soldering-tip temperature. Specifically, the rising speed of the soldering-tip temperature in the inventive example is faster than that in the comparative example (see the characteristics of the regions R1, R3, and R5).

### RESULT OF MULTIPLE-WORKPIECE TEST

Referring to FIG. 18, comparing between soldering-tip temperatures in the multiple-workpiece test, the soldering-tip temperature Ti of the inventive example was maintained at a value greater than the soldering-tip temperature Tc of the comparative example. In addition, along with an increase in the number of times of the continuous test, a minimum temperature of the comparative example is largely dropped, whereas a minimum temperature of the inventive example is not so largely dropped. Because two heaters having the same energy output were respectively used in the same heat transfer bodies of the inventive and comparative examples, the above result shows that the inventive example using the surface-modified copper pipe has better heat transfer efficiency than that in the comparative example using the stainless-steel pipe. Indeed, a temperature difference (Ti - Tc) at a last measurement point in the region R4 in FIG. 18 rises up to + 21°C.

### RESULT OF Large-Workpiece TEST

With respect to the result on the large-workpiece test board 115 indicated by the characteristic of the region R6 in FIG. 17, when the pointed head portion 31 of the heat transfer body 3 was placed on the large-workpiece test board 115, the soldering-tip temperature Tc of the comparative example dropped from 350° C to 208. 7° C (see FIG. 15). FIG. 15 also shows that the soldering-tip temperature Tc did not rise for a while even after the timing when the soldering-tip temperature Tc was dropped to 208.7°C. It means that the heat was gradually conducted, taking about 200 seconds, from the heating member to the heat transfer body 3 and then from the pointed head portion 31 of the heat transfer body 3 to the large-workpiece test board 115. After the elapse of about 200 seconds, the operator finally checked that the temperature of the large-workpiece test board 115 reached 200°C, and moved the heat transfer body of the electric soldering iron away from the large-workpiece test board 115. Then, the soldering-tip temperature Tc was sharply raised.

Differently, in the inventive example, when the pointed head portion 31 of the heat transfer body 3 was placed on the large-workpiece test board 115, there was only a small drop in the soldering-tip temperature Ti from 350° C to 221.6°C. In the inventive example, the soldering-tip temperature Ti was rabidly changed to a recovery tendency after about 40 seconds from the timing when the soldering-tip temperature Ti was lowered to 221.6°C. After the elapse of about 40 seconds, the operator thus checked that the temperature of the large-workpiece test board 115 reached 200°C. and moved the heat transfer body of the electric soldering iron away from the large-workpiece test board 115. Then, the soldering-tip temperature Ti was sharply raised.

Based on the above test results, it could be verified that, even though the tests were conducted using the same heat transfer bodies 3 and the heaters having the same heating value represented by power consumption of the heater, a large difference occurred between the inventive and comparative examples in the recovery of the soldering-tip temperature after heating of the large-workpiece test board. This would be considered as a result that the surface-modified copper pipe used in the inventive example allowed a heat transfer from the heating member to the heat transfer body to be efficiently performed, as compared with a conventional electric soldering iron using the stainless-steel pipe as in the comparative example.

Although the present invention has been described in term of specific exemplary embodiments. it will be appreciated that various changes and modifications will be made by those skilled in the art without departing from the scope of the invention, defined in the following claims.

## Claims

1. A heat transferring member (A) for a solder handling device, comprising a heat transfer body (3) of which a basic portion is made of copper or copper alloy, **characterized by** a pipe (4) including a tubular-shaped substrate made of copper or copper alloy and an aluminum oxide film formed on inner and outer peripheral surfaces of the tubular-shaped substrate,
wherein the pipe (4) is press-fitted into a hole (3a) formed in the heat transfer body (3) to receive therein a heating member (5), so that the aluminum oxide films are interposed between the heat transfer body (3) and the heating member (5).

2. The heat transferring member as defined in claim 1, **characterized in that** the aluminum oxide film includes an aluminum oxide passivation film (4c) formed through a reaction of oxygen in atmospheric air to a copper-aluminum alloy layer (4b) which is formed on a surface of a copper or copper alloy layer (4a) of the tubular-shaped substrate by subjecting the surface of the tubular-shaped substrate to an aluminizing treatment.

3. The heat transferring member as defined in claim 2, wherein the aluminizing treatment for the surface of the tubular-shaped substrate is an aluminum diffusion modification based on a pack cementation process.

4. The heat transferring member as defined in claim 2, wherein the aluminizing treatment for the surface of the tubular-shaped substrate includes processes of applying a mixture of an aluminum powder and a flux onto the surface of the tubular-shaped substrate, and then subjecting the resulting tubular-shaped substrate to a heating treatment to modify the surface of the tubular-shaped substrate.

5. The heat transferring member as defined in any one of claims 1 to 4, wherein the tubular-shaped substrate has an annular-shaped inwardly-extending flange (41) formed at a distal end thereof and faces a dead-end (3b) of the hole (3a).

6. The heat transferring member as defined in any one of claims 1 to 5, wherein the tubular-shaped substrate has a proximal end formed in a polygonal shape in transverse cross-section, and wherein a diameter (D2) of a circumscribed circle about the proximal end is greater than an outer diameter (D1) of an intermediate portion of the tubular-shaped substrate.

7. The heat transferring member as defined in any one of claims 1 to 5, wherein the tubular-shaped substrate has a proximal end of which trailing side is expanding in a flared shape.

8. An electric soldering iron comprising:
the heat transferring member (A) as defined in any one of claims 1 to 7; and a heating member (5) inserted into the pipe (4) of the heat transferring member, wherein the heat transfer body (3) of the heat transferring member includes a iron tip (31) adapted to melt solder by heat from the heating member (5) to form a solder joint.

9. An electric desoldering tool comprising:
the heat transferring member (A) as defined in any one of claims 1 to 7; a heating member (5) inserted into the pipe (4) of the heat transferring member; and
a sucking member (N) provided to the heat transfer body (3) of the heat transferring member (A) and adapted to suck solder melted by heat conducted to the heat transfer body (3).

## Patentansprüche

1. Wärmeübertragungselement (A) für ein Lötgerät, umfassend einen Wärmeübertragungskörper (3), der zu einem Hauptbestandteil aus Kupfer oder Kupfedegierung hergestellt ist, **gekennzeichnet durch** ein Rohr (4), einschließend ein röhrenartig geformtes Substrat aus Kupfer oder Kupferlegierung und einen Aluminiumoxidfilm, gebildet auf der inneren und äußeren peripheren Oberfläche des röhrenartig geformten Substrats, wobei dieses Rohr (4) in eine Bohrung (3a), gebildet in dem Wärmeübertragungskörper (3), eingepresst ist, um darin ein Wärmeelement (5) zu empfangen, so dass die Aluminiumoxidfilme zwischen dem Wärmeübertragungskörper (3) und dem Wärmeelement (5) angeordnet sind.

2. Wärmeübertragungselement gemäß Anspruch 1, **dadurch gekennzeichnet, dass** der Aluminiumoxidfilm einen Aluminiumoxidpassivierungsfilm (4c), gebildet in atmosphärischer Luft durch eine Reaktion von Sauerstoff auf eine Kupfer-Aluminiumlegierung-Schicht (4b), welche auf einer Oberfläche einer Kupfer- oder Kupferlegierungsschicht (4a) des röhrenartig geformten Substrats durch Unterwerfen der Oberfläche des röhrenartig geformten Substrats einer aluminierenden Behandlung gebildet worden ist, einschließt.

3. Wärmeübertragungselement gemäß Anspruch 2, wobei die aluminierende Behandlung für die Oberfläche des röhrenartig geformten Substrats eine Aluminiumdiffusions-Modifizierung basierend auf einem Pulverzementieren ist.

4. Wärmeübertragungselement nach Anspruch 2, wobei die aluminierende Behandlung für die Oberfläche des röhrenartig geformten Substrats Verfahren einschließt, bei denen ein Gemisch eines Aluminiumpulvers und eines Schmelzmittels auf die Oberfläche des röhrenartig geformten Substrats aufgebracht wird und anschließend das resultierende röhrenartig geformte Substrat einer Wärmebehandlung zur Modifizierung der Oberfläche des röhrenartig geformten Substrats unterworfen wird.

5. Wärmeübertragungselement, wie in einem der Ansprüchen 1 bis 4 definiert, wobei das röhrenartig geformte Substrat einen ringförmig geformten, sich einwärts erstreckenden Flansch (41), gebildet an einem distalen Ende davon, aufweist und dem blinden Rohrende (3b) der Bohrung (3a) gegenüberliegt.

6. Wärmeübertragungselement, wie in einem der Ansprüchen 1 bis 5 definiert, wobei das röhrenartig geformte Substrat ein proximales Ende, gebildet in einer polygonalen Form im transversalen Querschnitt, aufweist, und wobei ein Durchmesser (D2) eines umschriebenen Kreises über das proximale Ende größer als ein äußerer Durchmesser (D1) eines Zwischenabschnitts des röhrenartig geformten Substrats ist.

7. Wärmeübertragungselement, wie in einem der Ansprüche 1 bis 5 definiert, wobei das röhrenartig geformte Substrat ein proximales Ende aufweist, dessen Rückseite sich zu einer geweiteten Form ausdehnt.

8. Elektrischer Lötkolben, umfassend:
das Wärmeübertragungselement (A), wie in einem der Ansprüche 1 bis 7 definiert, und ein Wärmeelement (5), eingeführt in das Rohr (4) des Wärmeübertragungselementes,
wobei der Wärmeübertragungskörper (3) des Wärmeübertragungselementes eine Lötspitze bzw. Eisenspitze (31) einschließt, eingerichtet um geschmolzenes Lötmittel durch Wärme von dem Wärmeelement (5) zu schmelzen, um eine Lötverbindung auszubilden.

9. Elektrisches Entlötwerkzeug, umfassend:
das Wärmeübertragungselement (A), wie in einem der Ansprüche 1 bis 7 definiert,
ein Wärmeelement (5), eingeführt in das Rohr (4) des Wärmeübertragungselementes, und ein Saugstück (N), angeordnet an dem Wärmeübertragungskörper (3) des Wärmeübertragungselementes (A) und eingerichtet, um geschmolzenes Lötmittel, geschmolzen durch Wärme, zugeführt zu dem Wärmeübertragungskörper (3), abzusaugen.

## Revendications

1. Organe de transfert de chaleur (A) pour un dispositif de manipulation de brasure tendre, comprenant un corps de transfert de chaleur (3) dont une portion de base est faite de cuivre ou d'un alliage de cuivre, **caractérisé par** un tuyau (4) incluant un substrat de forme tubulaire fait de cuivre ou d'un alliage de cuivre et d'un film d'oxyde d'aluminium formé sur des surfaces périphériques interne et externe du substrat de forme tubulaire,
dans lequel le tuyau (4) est emmanché à force dans un trou (3a) formé dans le corps de transfert de chaleur (3) pour y recevoir un organe chauffant (5), de sorte que les films d'oxyde d'aluminium sont interposés entre le corps de transfert de chaleur (3) et l'organe chauffant (5).

2. Organe de transfert de chaleur selon la revendication 1, **caractérisé en ce que** le film d'oxyde d'aluminium inclut un film de passivation en oxyde d'aluminium (4c) formé par une réaction entre de l'oxygène dans l'air atmosphérique et une couche d'alliage cuivre-aluminium (4d) qui est formée sur une surface d'une couche de cuivre ou d'alliage de cuivre (4a) du substrat de forme tubulaire en soumettant la surface du substrat de forme tubulaire à un traitement d'aluminisation.

3. Organe de transfert de chaleur selon la revendication 2, dans lequel le traitement d'aluminisation pour la surface du substrat de forme tubulaire est une modification de diffusion d'aluminium basée sur un processus de cémentation en caisses.

4. Organe de transfert de chaleur selon la revendication 2, dans lequel le traitement d'aluminisation pour la surface du substrat de forme tubulaire inclut des processus d'application d'un mélange d'une poudre d'aluminium et d'un flux sur la surface du substrat de forme tubulaire, puis la soumission du substrat de forme tubulaire résultant à un traitement chauffant pour modifier la surface du substrat de forme tubulaire.

5. Organe de transfert de chaleur selon l'une quelconque des revendications 1 à 4, dans lequel le substrat de forme tubulaire comporte une bride s'étendant vers l'intérieur de forme annulaire (41) formée au niveau d'une extrémité distale de celui-ci et en regard d'un cul-de-sac (3b) du trou (3a).

6. Organe de transfert de chaleur selon l'une quelconque des revendications 1 à 5, dans lequel le substrat de forme tubulaire a une extrémité proximale de forme polygonale en section transversale, et dans lequel un diamètre (D2) d'un cercle circonscrit autour de l'extrémité proximale est plus grand qu'un diamètre externe (D1) d'une portion intermédiaire du substrat de forme tubulaire.

7. Organe de transfert de chaleur selon l'une quelconque des revendications 1 à 5, dans lequel le substrat de forme tubulaire a une extrémité proximale dont un côté de fuite s'élargit en une forme évasée.

8. Fer à souder électrique comprenant :
l'organe de transfert de chaleur (A) tel que défini dans l'une quelconque des revendications 1 à 7 ; et
un organe chauffant (5) inséré dans le tuyau (4) de l'organe de transfert de chaleur,
dans lequel le corps de transfert de chaleur (3) de l'organe de transfert de chaleur inclut une panne de fer (31) adaptée pour faire fondre de la brasure tendre par la chaleur provenant de l'organe chauffant (5) pour former un joint à brasure tendre.

9. Outil de débrasage tendre électrique comprenant :
l'organe de transfert de chaleur (A) tel que défini dans l'une quelconque des revendications 1 à 7 ;
un organe chauffant (5) inséré dans le tuyau (4) de l'organe de transfert de chaleur ; et
un organe d'aspiration (N) fourni au corps de transfert de chaleur (3) de l'organe de transfert de chaleur (A) et adapté pour aspirer la brasure tendre fondue par la chaleur conduite en direction du corps de transfert de chaleur (3).
